# EUROPEAN PATENT APPLICATION

(11) **EP 3 419 259 A1**
(43) Date of publication of application: **26.12.2018**
(21) Application number: 16890750.9
(22) Date of filing: 30.09.2016
(51) Int. Cl.: H04M 1/725, G06F 3/0484, A45C 11/00

(54) **MOBILE TERMINAL AND CONTROL METHOD THEREFOR**

(30) Priority: 19.02.2016 KR 20160019992
(71) Applicant: LG Electronics Inc., Seoul 07336 (KR)
(72) Inventor: LEE, Hyunjung, Seoul 06772 (KR); OH, Jungin, Seoul 06772 (KR); BAEK, Seoungho, Seoul 06772 (KR); LEE, Insun, Seoul 06772 (KR); LEE, Taekon, Seoul 06772 (KR); PARK, Jaewoo, Seoul 06772 (KR)
(74) Representative: Schornack, Oliver
(86) International application number: PCT/KR2016/010989
(87) International publication number: WO 2017/142159

(57) **Abstract**

The present invention relates to a mobile terminal comprising: a main body having a front surface and a rear surface; a touch screen disposed at the front surface; a cover mounted on the main body so as to open or close the touch screen and comprising a window part for exposing a portion of the touch screen to the outside and a translucent part spaced apart from the window part and covering another portion of the touch screen; and a control unit for controlling information to be displayed on a first display part, of the touch screen, corresponding to the window part, and on a second display part, of the touch screen, corresponding to the translucent part, wherein the control unit controls, by an input at the first display part, information to be displayed on the second display part or controls, by an input on the second display part, information to be displayed on the first display part, in a state in which the cover covers the front surface.

## Description

### BACKGROUND OF THE INVENTION

### 1. Field of the Invention

The present disclosure relates to a mobile terminal mounted with a cover to provide a function associated therewith, and a control method thereof.

### 2. Description of the Conventional Art

Terminals may be divided into mobile/portable terminals and stationary terminals according to their mobility. Furthermore, mobile terminals may be divided into handheld terminals and vehicle mounted terminals according to whether or not it can be directly carried by a user.

The functions of mobile terminals have been diversified. For example, the functions may include data and voice communication, photographing and video shooting through a camera, voice recording, playing a music file through a speaker system, and displaying an image or video on a display unit. Some terminals further include an electronic game play function or perform a multimedia player function. In particular, in recent years, mobile terminals may receive multicast signals that provide visual content such as broadcast, video or television programs.

As it becomes multifunctional, for example, such a terminal is allowed to capture still images or moving images, play music or video files, play games, receive broadcast and the like, so as to be implemented as an integrated multimedia player.

Furthermore, in recent years, the development of a cover (or pouch) for covering at least part of a mobile terminal to protect the mobile terminal has been actively developed. However, in a state that the cover covers the mobile terminal, a user has a limitation in operating the mobile terminal. Accordingly, studies on a method of allowing the user to operate the mobile terminal more easily even in a state that the mobile terminal is covered with the cover have been actively carried out.

### SUMMARY OF THE INVENTION

In order to solve the foregoing problems and other problems, an object of the present disclosure is to provide a mobile terminal provided with a cover formed to cover at least part of a display unit, wherein at least one function executable in the mobile terminal can be more conveniently controlled through a translucent portion formed on the cover, and a control method thereof.

In order to accomplish the objectives of the present disclosure, a mobile terminal according to an embodiment may include a main body having a front surface and a rear surface, a touch screen disposed on the front surface, a cover mounted on the main body to open and close the touch screen, and provided with a window portion for exposing a partial region of the touch screen to the outside and a translucent portion spaced apart from the window portion to cover another partial region of the touch screen, and a controller configured to control information displayed on a first display unit corresponding to the window portion and a second display unit corresponding to the translucent portion on the touch screen, wherein the controller controls information displayed on the second display unit by an input to the first display unit or controls information displayed on the first display unit by an input to the second display unit while the cover covers the front surface.

For an example associated with the present disclosure, an input to the second display unit may be based on an input applied through the translucent portion, and a function executable in the main body may be executed by an input to the second display unit.

For an example associated with the present disclosure, the window portion may be a window hole to be open or a window provided in the window hole, and an input to the first display unit may be based on an input applied through the first display unit or window, and any one function that is executable in the main body may be executed by an input to the first display unit.

For an example associated with the present disclosure, the cover may be provided with at least one magnet, and the main body may be provided with a hole sensor for sensing a magnetic force change due to the magnet.

For an example associated with the present disclosure, when it is sensed by the hole sensor that the cover is closed, the controller may increase the touch sensitivity of a touch sensor provided in the main body to allow an input through the translucent portion.

For an example associated with the present disclosure, an input applied through the window portion or the translucent portion may be a touch input or a touch and drag input while the cover is closed.

For an example associated with the present disclosure, information displayed on the second display unit by an input to the first display unit may be information related to information displayed on the first display unit, and information displayed on the first display unit by an input to the second display unit may be information related to information displayed on the second display unit.

For an example associated with the present disclosure, the cover may include a cover front portion configured to cover the front surface, a cover rear portion configured to cover the rear surface and fastened to the main body, and a connection portion configured to connect the cover front portion and the cover rear portion.

For an example associated with the present disclosure, the cover front portion may include a non-metallic member provided with a recess portion in which the inside is recessed, and formed of a translucent plastic material, and a film layer accommodated in the recess portion, wherein the film layer is formed not to protrude from the non-metallic member.

For an example associated with the present disclosure, the film layer may include a PET (polyester) film layer, a UV pattern layer provided on one side of the PET film layer, a deposition layer provided on one surface of the UV pattern layer, and a silk printed layer provided on one side of the deposition layer, wherein the silk printed layer has a predetermined pattern.

For an example associated with the present disclosure, one end portion of the non-metallic member may be formed with a protruding portion to be stepped downward.

For an example associated with the present disclosure, a rib may be formed on one surface of the cover rear portion to provide a space for accommodating the connection portion.

For an example associated with the present disclosure, the connection portion may be any one of polyurethane, leather, and cloth.

For an example associated with the present disclosure, there is provided a method of controlling a mobile terminal having a cover disposed to cover at least part of a touch screen and formed with a window portion, and the method may include sensing that the cover covers the touch screen, increasing the touch sensitivity of the mobile terminal when the touch screen is covered, partitioning the touch screen into a first display portion corresponding to the window portion and a second display portion corresponding to a translucent portion spaced apart from the window portion, and displaying different information on the first display portion and the second display portion, and controlling information displayed on the second display unit by a touch input of the first display unit or controlling information displayed on the first display unit by a touch input of the second display unit.

The effects of a mobile terminal according to the present disclosure and a control method thereof will be described as follows.

According to at least one of the embodiments of the present disclosure, the present disclosure may allow a user to operate the mobile terminal through a display region exposed through a window portion of a cover even in a state that the cover covers a display unit, thereby allowing the user to execute a desired function without opening the cover of the mobile terminal.

Furthermore, according to at least one of the embodiments of the present disclosure, the present disclosure may allow the display unit to be partitioned into a plurality of regions, and other information or functions associated with a function currently being executed may be selected according to an input applied to the plurality of regions, thereby allowing the user to more easily and intuitively select desired information or functions.

In addition, according to at least one of the embodiments of the present disclosure, the present disclosure may display information on other functions associated with a currently executed function as well as an execution screen in each of the plurality of partitioned regions, thereby allowing the user to more easily select other functions associated with a function currently being executed.

### BRIEF DESCRIPTION OF THE DRAWING

The accompanying drawings, which are included to provide a further understanding of the invention and are incorporated in and constitute a part of this specification, illustrate embodiments of the invention and together with the description serve to explain the principles of the invention.

In the drawings:
FIG. 1A is a block diagram for explaining a mobile terminal associated with the present disclosure;
FIGS. 1B and 1C are conceptual views illustrating an example in which a mobile terminal associated with the present disclosure is seen from different directions;
FIGS. 2A and 2B are perspective views showing a mobile terminal accommodated in a cover according to an embodiment of the present disclosure;
FIG. 3 is an exploded view of the cover in FIG. 2A;
FIG. 4 is a flowchart for explaining a method of controlling a mobile terminal according to an embodiment of the present disclosure;
FIG. 5(a) illustrates a mobile terminal in an LCD off state according to an embodiment of the present disclosure, and FIG. 5(b) illustrates a mobile terminal in an LCD on state according to an embodiment of the present disclosure;
FIGS. 6(a) through 6(c) are exemplary views illustrating an example in which a specific function is executed according to an input applied to a mobile terminal according to the present disclosure;
FIG. 7(a) illustrates a mobile terminal displaying schedule information according to an embodiment of the present disclosure, and FIG. 7(b) illustrates a mobile terminal in a state of changing schedule information;
FIG. 8(a) illustrates a mobile terminal in the case of reproducing multimedia according to an embodiment of the present invention, and FIG. 8(b) illustrates a mobile terminal in a state of changing multimedia information;
FIGS. 9(a) and 9(b) are views illustrating a case where a mobile terminal is operated as a remote controller according to an embodiment of the present disclosure;
FIG. 10(a) illustrates a state of a mobile terminal when an event is received according to an embodiment of the present disclosure, and FIG. 10(b) illustrates a state of a mobile terminal when a received event is to be checked;
FIG. 11 illustrates a state of a mobile terminal when an alarm sounds according to an embodiment of the present disclosure;
FIG. 12 illustrates a state of a mobile terminal operating as a stop watch according to an embodiment of the present disclosure;
FIG. 13 illustrates a state of a mobile terminal when power is turned off according to an embodiment of the present invention; and
FIG. 14 is a cross-sectional view taken along line A-A of FIG. 2B.

### DETAILED DESCRIPTION OF THE PREFERRED EMBODIMENT

Hereinafter, the embodiments disclosed herein will be described in detail with reference to the accompanying drawings, and the same or similar elements are designated with the same numeral references regardless of the numerals in the drawings and their redundant description will be omitted. A suffix "module" and "unit" used for constituent elements disclosed in the following description is merely intended for easy description of the specification, and the suffix itself does not give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. On the contrary, in case where an element is "directly connected" or "directly linked" to another element, it should be understood that any other element is not existed therebetween.

A singular representation may include a plural representation as far as it represents a definitely different meaning from the context.

Terms "include" or "has" used herein should be understood that they are intended to indicate an existence of several components or several steps, disclosed in the specification, and it may also be understood that part of the components or steps may not be included or additional components or steps may further be included.

Mobile terminals described herein may include cellular phones, smart phones, laptop computers, digital broadcasting terminals, personal digital assistants (PDAs), portable multimedia players (PMPs), navigators, slate PCs, tablet PCs, ultrabooks, wearable devices (for example, smart watches, smart glasses, head mounted displays (HMDs)), and the like.

However, it may be easily understood by those skilled in the art that the configuration according to the exemplary embodiments of this specification can also be applied to stationary terminals such as digital TV, desktop computers, digital signages, and the like, excluding a case of being applicable only to the mobile terminals.

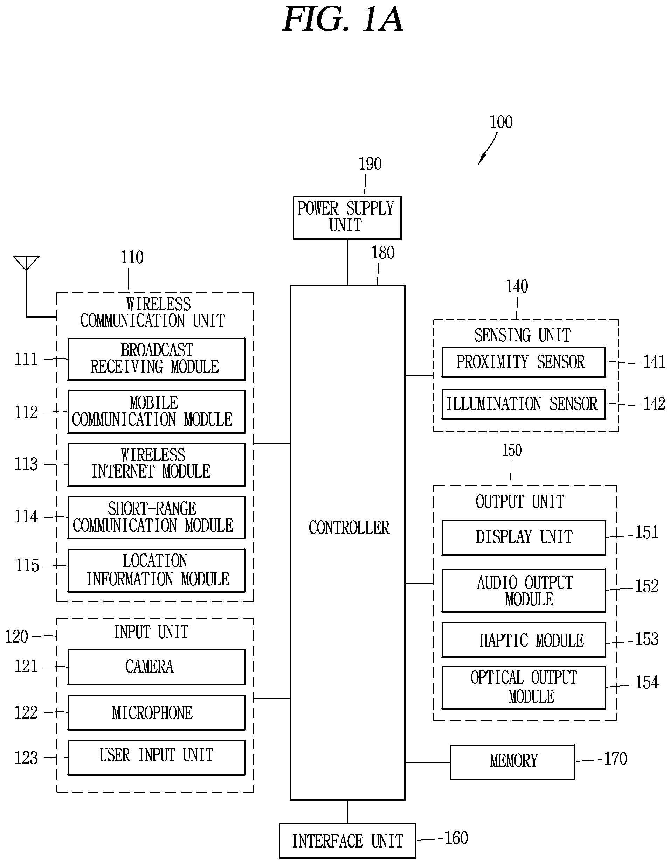

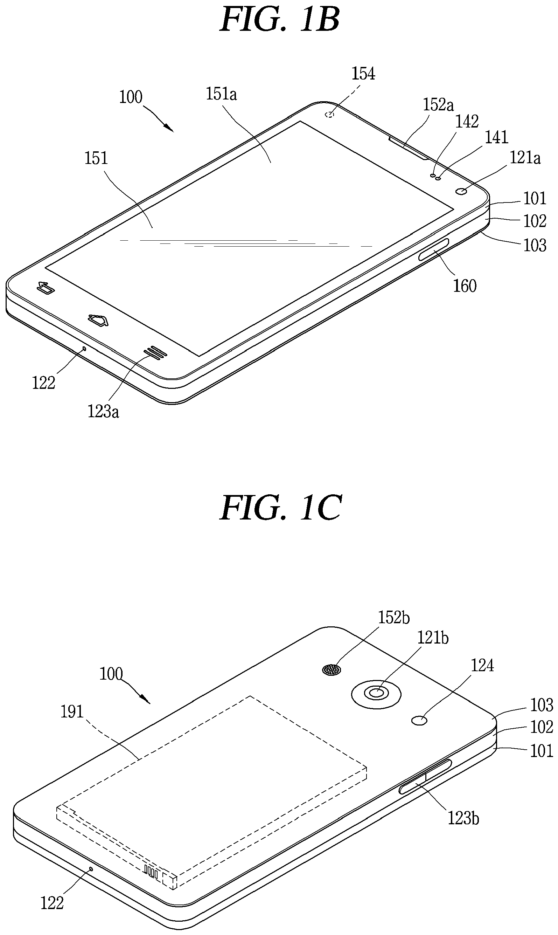

Referring to FIGS. 1A through 1C, FIG. 1A is a block diagram for explaining a mobile terminal associated with the present disclosure, and FIGS. 1B and 1C are conceptual views illustrating an example in which the mobile terminal associated with the present disclosure is seen from different directions.

The mobile terminal 100 may include components, such as a wireless communication unit 110, an input unit 120, a sensing unit 140, an output unit 150, an interface unit 160, a memory 170, a controller 180, a power supply unit 190 and the like. The components illustrated in FIG. 1A are not essential for implementing the mobile terminal 100, and thus the mobile terminal 100 described herein may have more or fewer components than those listed above.

In more detail, the wireless communication unit 110 of those components may typically include one or more modules which permit wireless communications between the mobile terminal 100 and a wireless communication system, between the mobile terminal 100 and another mobile terminal, or between the mobile terminal 100 and an external server. In addition, the wireless communication unit 110 may include one or more modules that connect the mobile terminal 100 to one or more networks.

The wireless communication unit 110 may include at least one of a broadcast receiving module 111, a mobile communication module 112, a wireless Internet module 113, a short-range communication module 114, a location information module 115 and the like.

The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone 122, a battery gage, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). The mobile terminal 100 may be configured to utilize information obtained from sensing unit 140, and in particular, information obtained from one or more sensors of the sensing unit 140, and combinations thereof.

The output unit 150 may be configured to output an audio signal, a video signal or a tactile signal. The output unit 150 may include a display unit 151, an audio output module 152, a haptic module 153, an optical output unit 154 and the like. The display unit 151 may have an inter-layered structure or an integrated structure with a touch sensor in order to facilitate a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

In addition, the memory 170 stores data that support various functions of the mobile terminal 100. The memory 170 is typically implemented to store data to support various functions or features of the mobile terminal 100. For instance, the memory 170 may be configured to store application programs executed in the mobile terminal 100, data or instructions for operations of the mobile terminal 100, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). On the other hand, the application programs may be stored in the memory 170, installed in the mobile terminal 100, and executed by the controller 180 to perform an operation (or a function) of the mobile terminal 100.

The controller 180 may typically control an overall operation of the mobile terminal 100 in addition to the operations associated with the application programs. The controller 180 may provide or process information or functions appropriate for a user in a manner of processing signals, data, information and the like, which are input or output by the aforementioned components, or activating the application programs stored in the memory 170.

Furthermore, the controller 180 may control at least part of the components illustrated in FIG. 1A, in order to drive the application programs stored in the memory 170. In addition, the controller 180 may drive the application programs by combining at least two of the components included in the mobile terminal 100 for operation.

The power supply unit 190 may receive external power or internal power and supply appropriate power required for operating respective elements and components included in the mobile terminal 100 under the control of the controller 180. The power supply unit 190 may include a battery, and the battery may be an embedded battery or a replaceable battery.

At least part of those elements and components may be combined to implement operation and control of the mobile terminal or a control method of the mobile terminal according to various exemplary embodiments described herein. Furthermore, the operation and control or the control method of the mobile terminal may be implemented in the mobile terminal in such a manner of activating at least one application program stored in the memory 170.

Hereinafter, each aforementioned component will be described in more detail with reference to FIG. 1A, prior to explaining various exemplary embodiments implemented by the mobile terminal 100 having the configuration.

First, the wireless communication unit 110 will be described. The broadcast receiving module 111 of the wireless communication unit 110 may receive a broadcast signal and/or broadcast associated information from an external broadcast managing entity via a broadcast channel. The broadcast channel may include a satellite channel and/or a terrestrial channel. At least two broadcast receiving modules 111 may be provided in the portable mobile terminal 100 to simultaneously receive at least two broadcast channels or switch the broadcast channels.

The mobile communication module 112 may transmit/receive wireless signals to/from at least one of network entities, for example, a base station, an external terminal, a server, and the like, on a mobile communication network, which is constructed according to technical standards or transmission methods for mobile communications (for example, Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), Long Term Evolution-Advanced (LTE-A), etc.)

The wireless signals may include audio call signal, video (telephony) call signal, or various formats of data according to transmission/reception of text/multimedia messages.

The wireless Internet module 113 refers to a module for supporting wireless Internet access, and may be built-in or externally installed on the mobile terminal 100. The wireless Internet module 113 may transmit and/or receive wireless signals via communication networks according to wireless Internet technologies.

Examples of such wireless Internet access may include Wireless LAN (WLAN), Wireless-Fidelity (Wi-Fi), Wireless Fidelity Direct (Wi-Fi Direct), Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), LTE (Long Term Evolution), LTE-A (Long Term Evolution-Advanced), and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LTE, LTE-A and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, and the like. The short-range communication module 114 may support wireless communications between the mobile terminal 100 and a wireless communication system, between the mobile terminal 100 and another mobile terminal 100, or between the mobile terminal and a network where another mobile terminal 100 (or an external server) is located, via wireless personal area networks. The short-range communication module 114 denotes a module for short-range communications.

Here, the another mobile terminal 100 may be a wearable device, for example, a smart watch, smart glasses or a head mounted display (HMD), which is able to exchange data with the mobile terminal 100 (or to link data with the mobile terminal 100). The short-range communication module 114 may sense (recognize) a wearable device, which is able to communicate with the mobile terminal), near the mobile terminal 100. In addition, when the sensed wearable device is a device which is authenticated to communicate with the mobile terminal 100 according to the present disclosure, the controller 180 may transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal 100. As an example, the location information module 115 includes a Global Position System (GPS) module, a WiFi module, or both. For example, when the mobile terminal 100 uses the GPS module, a position of the terminal 100 may be acquired using a signal sent from a GPS satellite. As another example, when the mobile terminal 100 uses the Wi-Fi module, a position of the mobile terminal 100 may be acquired based on information related to a wireless access point (AP) which transmits or receives a wireless signal to or from the Wi-Fi module. According to the need, the location information module 115 may perform any function of another module of the wireless communication unit 110 to obtain data for the location of the mobile terminal 100 in a substitutive or additional manner. As a module used to acquire the location (or current location) of the mobile terminal 100, the location information module 115 may not be necessarily limited to a module for directly calculating or acquiring the location of the mobile terminal 100.

Next, the input unit 120 is configured to provide an video information (or signal), audio information (or signal), data or an input of information entered by a user, and the mobile terminal 100 may include one or a plurality of cameras 121 to enter video information. The camera 121 processes a image frame, such as still picture or video, acquired by an image sensor in a video phone call or image capturing mode. The processed image frames may be displayed on the display unit 151. On the other hand, the plurality of cameras 121 disposed in the mobile terminal 100 may be arranged in a matrix configuration. By use of the cameras 121 having the matrix configuration, a plurality of image information having various angles or focal points may be input into the mobile terminal 100. As another example, the cameras 121 may be located in a stereoscopic arrangement to acquire left and right images for implementing a stereoscopic image.

The microphone 122 may process an external audio signal into electric audio data. The processed audio data may be utilized in various manners according to a function being executed in the mobile terminal 100 (or an application program being executed). On the other hand, the microphone 122 may include assorted noise removing algorithms to remove noise generated in the course of receiving the external audio signal.

The user input unit 123 may receive information input by a user. When information is input through the user input unit 123, the controller 180 may control an operation of the mobile terminal 100 to correspond to the input information. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

On the other hand, the sensing unit 140 may sense at least one of internal information of the mobile terminal 100, surrounding environment information of the mobile terminal 100 and user information, and generate a sensing signal corresponding to it. The controller 180 may control an operation of the mobile terminal 100 or execute data processing, a function or an operation associated with an application program installed in the mobile terminal based on the sensing signal. Hereinafter, description will be given in more detail of representative sensors of various sensors which may be included in the sensing unit 140.

First, a proximity sensor 141 refers to a sensor to sense presence or absence of an object approaching to a surface to be sensed, or an object disposed near a -surface to be sensed, by using an electromagnetic field or infrared rays without a mechanical contact. The proximity sensor 141 may be arranged at an inner region of the mobile terminal 100 covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 may sense proximity of a pointer to the touch screen by changes of an electromagnetic field, which is responsive to an approach of an object with conductivity. In this case, the touch screen (touch sensor) may also be categorized as a proximity sensor.

On the other hand, for the sake of brief explanation, a behavior in which the pointer is positioned to be proximate onto the touch screen without contact will be referred to as "proximity touch," whereas a behavior in which the pointer substantially comes into contact with the touch screen will be referred to as "contact touch." For the position corresponding to the proximity touch of the pointer on the touch screen, such position will correspond to a position where the pointer faces perpendicular to the touch screen upon the proximity touch of the pointer. The proximity sensor 141 may sense proximity touch, and proximity touch patterns (e.g., distance, direction, speed, time, position, moving state, etc.).

On the other hand, the controller 180 may process data (or information) corresponding to the proximity touches and the proximity touch patterns sensed by the proximity sensor 141, and output visual information corresponding to the process data on the touch screen. In addition, the controller 180 may control the mobile terminal 100 to execute different operations or process different data (or information) according to whether a touch with respect to the same point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151 or a capacitance occurring from a specific part of the display unit 151, into electric input signals. Also, the touch sensor may be configured to sense not only a touched position and a touched area, but also touch pressure. Here, the touch object body may be a finger, a touch pen or stylus pen, a pointer, or the like as an object through which a touch is applied to the touch sensor.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180 or the controller 180 itself.

On the other hand, the controller 180 may execute a different control or the same control according to a type of an object which touches the touch screen (or a touch key provided in addition to the touch screen). Whether to execute the different control or the same control according to the object which gives a touch input may be decided based on a current operating state of the mobile terminal 100 or a currently executed application program.

Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swype touch, a hovering touch, and the like.

An ultrasonic sensor may be configured to recognize position information relating to a sensing object by using ultrasonic waves. On the other hands, the controller 180 may calculate a position of a wave generation source based on information sensed by an illumination sensor and a plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using the fact. In more detail, the position of the wave generation source may be calculated by using a time difference from the time that the ultrasonic wave reaches based on the light as a reference signal.

The camera 121 constructing the input unit 120 may be a type of camera sensor. The camera sensor may include at least one of a photo sensor (or image sensor) and a laser sensor.

Implementing the camera 121 with a laser sensor may allow detection of a touch of a physical object with respect to a 3D stereoscopic image. The photo sensor may be laminated on the display device. The photo sensor may be configured to scan a movement of the sensing object in proximity to the touch screen. In more detail, the photo sensor may include photo diodes and transistors at rows and columns to scan content placed on the photo sensor by using an electrical signal which changes according to the quantity of applied light. Namely, the photo sensor may calculate the coordinates of the sensing object according to variation of light to thus obtain position information of the sensing object.

The display unit 151 may display (output) information processed in the mobile terminal 100. For example, the display unit 151 may display execution screen information of an application program driven in the mobile terminal 100 or user interface (UI) and graphic user interface (GUI) information in response to the execution screen information.

Furthermore, the display unit 151 may also be implemented as a stereoscopic display unit for displaying stereoscopic images.

The stereoscopic display unit may employ a stereoscopic display scheme such as stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. Also, the audio output module 152 may also provide audible output signals associated with a particular function (e.g., a call signal reception sound, a message reception sound, etc.) carried out by the mobile terminal 100. The audio output module 152 may include a receiver, a speaker, a buzzer or the like.

A haptic module 153 may generate various tactile effects the that user may feel. A typical example of the tactile effect generated by the haptic module 153 may be vibration. Strength, pattern and the like of the vibration generated by the haptic module 153 may be controllable by a user selection or setting of the controller. For example, the haptic module 153 may output different vibrations in a combining manner or a sequential manner.

Besides vibration, the haptic module 153 may generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 153 may be configured to transmit tactile effects through a user's direct contact, or a user's muscular sense using a finger or a hand. Two or more haptic modules 153 may be provided according to the particular configuration of the mobile terminal 100.

An optical output module 154 may output a signal for indicating an event generation using the light of a light source of the mobile terminal 100. Examples of events generated in the mobile terminal 100 may include a message reception, a call signal reception, a missed call, an alarm, a schedule notice, an email reception, an information reception through an application, and the like.

A signal output by the optical output module 154 may be implemented in such a manner that the mobile terminal emits monochromatic light or light with a plurality of colors. The signal output may be ended as the mobile terminal senses a user's event checking.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identification device") may take the form of a smart card. Accordingly, the identifying device may be connected with the terminal 100 via the interface unit 160.

Furthermore, when the mobile terminal 100 is connected with an external cradle, the interface unit 160 may serve as a passage to allow power from the cradle to be supplied to the mobile terminal 100 therethrough or may serve as a passage to allow various command signals input by the user from the cradle to be transferred to the mobile terminal therethrough. Such various command signals or power inputted from the cradle may operate as signals for recognizing that the mobile terminal 100 has accurately been mounted to the cradle.

The memory 170 can store programs to support operations of the controller 180 and store input/output data (for example, phonebook, messages, still images, videos, etc.). The memory 170 may store data associated with various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 170 over the Internet.

As aforementioned, the controller 180 may typically control the general operations of the mobile terminal 100. For example, the controller 180 may set or release a locked state a lock state for restricting a user from inputting a control command with respect to applications when a state of the mobile terminal 100 meets a preset condition.

Furthermore, the controller 180 may also perform controlling and processing associated with voice calls, data communications, video calls, and the like, or perform pattern recognition processing to recognize a handwriting input or a picture drawing input performed on the touch screen as characters or images, respectively. In addition, the controller 180 may control one or combination of those components in order to implement various exemplary embodiment disclosed herein on the mobile terminal 100.

The power supply unit 190 may receive external power or internal power and supply appropriate power required for operating respective elements and components included in the electronic device 100 under the control of the controller 180. The power supply unit 190 may include a battery, which is typically rechargeable or be detachably coupled to the terminal body for charging.

Furthermore, the power supply unit 190 may include a connection port. The connection port may be configured as one example of the interface unit 160 to which an external (re)charger for supplying power to recharge the battery is electrically connected.

As another example, the power supply unit 190 may be configured to recharge the battery in a wireless manner without use of the connection port. Here, the power supply unit 190 may receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable or its similar medium using, for example, software, hardware, or any combination thereof.

On the other hand, the sensing unit 140 of the mobile terminal 100 according to an embodiment of the present disclosure may further include a tap sensing unit (not shown) for sensing a tap or a tap gesture in which the user knocks the body or the display unit 151.

Here, the tap sensing unit may sense a gesture of knocking the body or the display unit 151 of the mobile terminal 100. More specifically, a tap may be understood as an operation of lightly hitting the body of the mobile terminal 100, the display unit 151 or an object with a tap object such as a finger or the like or an operation of allowing a tap object to be lightly in contact with the body of the mobile terminal 100, the display unit 151 or the object.

On the other hand, the tap object for applying such a tap may be a thing capable of exerting an external force to the body of the mobile terminal 100, the display unit 151 or an object, for example, a finger, a stylus pen, a pen, a pointer, a fist, or the like. The tap object is not necessarily limited to an object capable of applying a touch input to the mobile terminal 100 according to the present disclosure, and the type thereof is irrelevant if it is a thing capable of exerting an external force to the mobile terminal 100, the display unit 151 or an object.

On the other hand, an object to which the tap gesture is applied may include at least one of a body of the mobile terminal 100 and an object on which the mobile terminal 100 is placed.

Meanwhile, in the present disclosure, the tap or tap gesture may be sensed by at least one of an acceleration sensor and a touch sensor included in the tap sensing unit. Here, the acceleration sensor is a sensor capable of measuring a dynamic force such as acceleration, vibration, shock, or the like, of the body of the mobile terminal 100.

In other words, the acceleration sensor may sense the movement (or vibration) of the body of the mobile terminal 100 generated by a tap gesture to sense whether a tap is applied to an object. Therefore, the acceleration sensor may sense an object located near the body of the mobile terminal 100 being tapped such as sensing a tap to the body or the touch screen of the mobile terminal 100 or sensing the generation of movement or vibration of the body of the mobile terminal 100.

As described above, as long as it is able to sense movement or vibration to the body of the mobile terminal 100, the acceleration sensor may sense the tap when the tap is applied to a point out of the body of the mobile terminal 100 as well as when the tap is applied to the body or the display unit 151 of the mobile terminal 100.

In the mobile terminal 100 according to the present disclosure, only one of the acceleration sensor and the touch sensor may be used, the acceleration sensor and the touch sensor may be sequentially used or the acceleration sensor and the touch sensor may be simultaneously used to sense a tap to the body or the display unit 151 of the mobile terminal 100. On the other hand, in order to sense a tap, a mode using only the acceleration sensor may be referred to as a first mode, a mode using the touch sensor may be referred to as a second mode, and a mode using both the acceleration sensor and the touch sensor may be referred to as a third mode or a hybrid mode.

On the other hand, when the tap is sensed through the touch sensor, it may be possible to more accurately obtain the position where the tap is sensed.

Meanwhile, in the mobile terminal 100 according to the present disclosure, in order to sense the tap through the acceleration sensor or the touch sensor, it may operate in a specific mode in which the minimum current or power is consumed even when the display unit 151 of the mobile terminal 100 is in an inactive state. This specific mode may be referred to as a "doze mode."

For example, the doze mode may be a state in which only light emitting devices for displaying a screen on the display unit 151 are turned off, and the touch sensor maintains an on-state, in a touch screen structure in which the touch sensor and the display unit 151 form an interlayer structure. Alternatively, the doze mode may be a mode in which the display unit 151 is turned off and the acceleration sensor maintains an on-state. Alternatively, the doze mode may be a mode in which the display unit 151 is turned off, and both the touch sensor and the acceleration sensor maintain an on-state.

Therefore, when the user applied the tap to at least one point on the display unit 151 or a specific point of the body or the display unit 151 of the mobile terminal 100 in the doze mode state, that is, in a state that the illumination of the display unit 151 is turned off or in a state that the display unit 151 is turned off (the display unit 151 is deactivated), it may be possible to sense that the tap has been applied from the user through at least one of the touch sensor or the acceleration sensor that is turned on.

Furthermore, the tap sensing unit may determine that a "tap" for the purpose of controlling the mobile terminal 100 has been sensed only when at least two or more taps are applied within a reference period of time. For example, when one tap is applied to the display unit 151 by a touch object capable of applying a touch to the display unit 151, the tap sensing unit may recognize the one tap as a touch input. In other words, in this case, the controller 180 may not control a function corresponding to the one tap, but may control a function according to a touch input corresponding to the one tap (for example, a function of selecting an icon displayed at a point to which the touch is applied).

Accordingly, the controller 180 may determine that a "tab" for controlling one or more functions only when at least two or more (or a plurality of) taps (or a plurality of times) continuously applied within a reference period of time are sensed by the tap sensing unit.

In other words, tap gestures may denote that at least two or more tap gestures are continuously sensed within a reference period of time. Therefore, in the following description, the sensing of a "tap" may denote that an object such as a user's finger or a touch pen being knocked on the body or the display unit 151 of the mobile terminal 100 a plural number of times has been sensed.

In addition, the controller 180 may determine whether the taps are respectively sensed by the user's different fingers or sensed by one finger as well as whether the tap is sensed within a reference period of time. For example, when the taps are sensed by the display unit 151, the controller 180 may sense whether the taps are formed through one finger or respectively formed through different fingers using a fingerprint sensed from a portion to which the taps have been applied. Alternatively, the controller 180 may recognize a position at which the taps are sensed on the display unit 151 or an acceleration generated due to the taps through at least one of the touch sensor or the acceleration sensor provided in the tap sensing unit to sense whether the taps are formed through one finger or formed through different fingers, respectively.

Moreover, the controller 180 may determine whether the user has entered the taps through one hand or one finger or both hands or at least two fingers in further consideration of an angle and a distance at which the tap is applied or a direction in which the fingerprint is recognized, and the like.

On the other hand, the taps may mean a plurality of knocks continuously sensed within a reference period of time. Here, the reference period of time may be a very short period of time, for example, 300 ms to 2 s or less.

For this purpose, when it is sensed by the tap sensing unit that the body or the display unit 151 of the mobile terminal 100 is knocked for the first time, the tap sensing unit may sense whether there is next knock subsequent to first knock within a reference period of time from the time when the first knock is sensed. Furthermore, when the next knock is sensed within a reference period of time, the tap sensing unit or the controller 180 may determine that a tap for controlling a specific function of the mobile terminal 100 has been sensed according to an embodiment of the present disclosure. In this manner, the controller 180 may recognize it as a valid tap only when a second tap is sensed within a predetermined time period subsequent to sensing a first tap, thereby determining whether the user wants to control the mobile terminal 100 or a tap is applied by mistake.

In addition, there may be various methods for recognizing the "valid tap." For example, the controller 180 may recognize the sensing of a first tap knocking the body by a first reference number of times or above the first reference number of times and then a second tap knocking the body by a second reference number of times or above the second reference number of times within a predetermined period of time as the "valid tap." Here, the first reference number of times and the second reference number of times may be equal to or different from each other. For example, the first reference number of times may be one and the second reference number of times may be two. For another example, both the first reference number of times and the second reference number of times may be one.

Furthermore, the controller 180 may determine that the "taps" are detected only when the taps are applied within a "predetermined region." In other words, when it is sensed that the body of the mobile terminal 100 is knocked for the first time, the controller 180 may calculate a predetermined region from the point where the first knock is sensed. Then, the controller 180 may determine that the first tap or second tap has been applied when knocks are sensed in the "predetermined region" by the first or second reference number of times or above the first or second reference number of times subsequent to the first knock within the reference period of time from the time the first knock is sensed .

On the other hand, the foregoing reference period of time and predetermined region may course be modified in various ways according to the embodiments.

On the other hand, the first tap and the second tap may of course be sensed as separate tabs depending on a position at which each tap is sensed as well as the reference time and the predetermined region. In other words, the controller 180 may determine that the first tap and the second tap are applied when the second tap is sensed at a position spaced apart by a predetermined distance from a position where the first tap is sensed. Furthermore, when the first tap and the second tap are recognized based on the sensed position, the first tap and the second tap may be simultaneously sensed.

In addition, when the first tap and the second tap are formed by a plurality of touches, that is, a plurality of knocks, the plurality of touches constituting the first tap and the second tab, respectively, may of course be simultaneously sensed. For example, when an initial touch constituting the second tap is sensed at a position spaced apart by a predetermined distance or more from a position where an initial touch of the first tap is sensed while at the same time sensing an initial touch constituting the first tap, the controller 180 can sense initial touches constituting the first tap and the second tap, respectively. Furthermore, the controller 180 may sense an additional touch input sensed at each position, and determine that the first tap and the second tap have been applied when touches are sensed above a first reference number of times or a second reference number of times.

On the other hand, when taps to the body or the display unit 151 of the mobile terminal 100 are sensed a plural number of times from the tap sensing unit, the controller 180 may control at least one of functions executable in the mobile terminal 100 based on the taps sensed the plural number of times.

For example, the controller 180 may control at least one of functions executable on the mobile terminal 100 when the plural number of taps corresponds to a preset condition. For an example, the controller 180 may compare a plurality of preset touch input patterns with a pattern formed by the plural number of taps, and release the locked state of the mobile terminal 100 according to any one of the plurality of preset touch input patterns. In this case, the controller 180 may perform any one function corresponding to the any one touch input pattern.

Here, the function may denote all types of functions that can be executed or operated on the mobile terminal 100. For example, one of the functions may be an application installed in the mobile terminal 100. For example, "executing an arbitrary function" may denote "executing or operating an arbitrary application in the mobile terminal 100.

For another example, the function may be a function required to perform a basic operation of the mobile terminal 100. For example, the function required to perform the basic operation may be a function of turning on/off a light provided in the display unit 151, and there may exist a function of switching the mobile terminal 100 from a released state to a locked state or, conversely, switching from a locked state to a released state, a function of setting a communication network, a function of changing the setting information of the mobile terminal 100, and the like.

Hereinafter, the mobile terminal 100 according to an embodiment of the present disclosure described above in FIG. 1A or a terminal in which the components of the mobile terminal 100 are disposed or a structure of the mobile terminal 100 will be described with reference to FIGS. 1B and 1C.

Referring now to FIGS. 1B and 1C, the mobile terminal 100 is described with reference to a bar-type terminal body. However, the present disclosure may not be necessarily limited to this, and may be also applicable to various structures such as a watch type, a clip type, a glasses type, a folder type in which two or more bodies are coupled to each other in a relatively movable manner, a slide type, a swing type, a swivel type, and the like. The description in association with a specific type of mobile terminal or on a specific type of mobile terminal will be also typically applied to another type of mobile terminal.

Here, the terminal body may be understood as a conception which indicates the mobile terminal 100 as at least one assembly.

The mobile terminal 100 may include a case (for example, a frame, a housing, a cover, etc.) constituting the appearance thereof. In this embodiment, the case may be divided into a front case 101 and a rear case 102. Various electronic components may be incorporated into a space formed between the front case 101 and the rear case 102. At least one middle case may be additionally disposed between the front case 101 and the rear case 102

A display unit 151 may be disposed on a front surface of the terminal body to output information. As illustrated, a window 151a of the display unit 151 may be mounted to the front case 101 so as to form the front surface of the terminal body together with the front case 101.

In some cases, electronic components may also be mounted to the rear case 102. Examples of those electronic components mounted to the rear case 102 may include a detachable battery, an identification module, a memory card and the like. Here, a rear cover 103 for covering the electronic components mounted may be detachably coupled to the rear case 102. Therefore, when the rear cover 103 is detached from the rear case 102, the electronic components mounted to the rear case 102 may be externally exposed.

As illustrated in the drawing, when the rear cover 103 is coupled to the rear case 102, a side surface of the rear case 102 may be partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

Unlike the example which the plurality of cases form an inner space for accommodating such various components, the mobile terminal 100 may be configured such that one case forms the inner space. In this example, a mobile terminal 100 having a uni-body formed in such a manner that synthetic resin or metal extends from a side surface to a rear surface may also be implemented.

On the other hand, the mobile terminal 100 may include a waterproofing unit (not shown) for preventing an introduction of water into the terminal body. For example, the waterproof portion may include a waterproof member provided between the window 151a and the front case 101, between the front case 101 and the rear case 102, or between the rear case 102 and the back cover 103, to hermetically seal an inner space when those cases are coupled to each other.

The mobile terminal 100 may include a display unit 151, first and second audio output modules 152a and 152b, a proximity sensor 141, an illumination sensor 152, an optical output module 154, first and second cameras 121a and 121b, first and second manipulation units 123a and 123b, a microphone 122, an interface unit 160 and the like.

Hereinafter, description will be given of an exemplary mobile terminal 100 that the display unit 151, the first audio output module 152a, the proximity sensor 141, the illumination sensor 142, the optical output module 154, the first camera 121a and the first manipulation unit 123a are disposed on the front surface of the terminal body, the second manipulation unit 123b, the microphone 122 and the interface unit 160 are disposed on a side surface of the terminal body, and the second audio output module 152b and the second camera 121b are disposed on a rear surface of the terminal body, with reference to FIGS. 1B and 1C.

However, the foregoing configuration may not be necessarily limited to the arrangement. The foregoing configuration may be excluded, substituted or disposed on another surface if necessary. For example, the first manipulation unit 123a may not be disposed on the front surface of the terminal body, and the second audio output module 152b may be disposed on the side surface other than the rear surface of the terminal body.

The display unit 151 may display (output) information processed in the mobile terminal 100. For example, the display unit 151 may display execution screen information of an application program driven in the mobile terminal 100 or user interface (UI) and graphic user interface (GUI) information in response to the execution screen information.

The display unit 151 may include at least one of a liquid crystal display (LCD), a thin film transistor-liquid crystal display (TFT-LCD), an organic light emitting diode (OLED), a flexible display, a 3-dimensional (3D) display, and an e-ink display.

The display unit 151 may be implemented in two or more in number according to a configured aspect of the mobile terminal 100. For instance, a plurality of the display units 151 may be arranged on one surface to be spaced apart from or integrated with each other, or may be arranged on different surfaces.

The display unit 151 may include a touch sensor which senses a touch onto the display unit so as to receive a control command in a touching manner. When a touch is input to the display unit 151, the touch sensor may be configured to sense this touch and the controller 180 may generate a control command corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

In this manner, the display unit 151 may form a flexible touch screen along with the touch sensor, and in this case, the touch screen may function as the user input unit 123 (refer to FIG. 1A). Therefore, the touch screen may replace at least some of the functions of the first manipulation unit 123a. In the following description, an example in which the display unit 151 is implemented as a touch screen will be described.

The first audio output module 152a may be implemented in the form of a receiver for transferring voice sounds to the user's ear or a loud speaker for outputting various alarm sounds or multimedia reproduction sounds.

The window 151a of the touch screen 151 may include a sound hole for emitting sounds generated from the first audio output module 152a. Here, the present disclosure may not be limited to this. It may also be configured such that the sounds are released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 may output light for indicating an event generation. Examples of the event generated in the mobile terminal 100 may include a message reception, a call signal reception, a missed call, an alarm, a schedule notice, an email reception, information reception through an application, and the like. When a user's event check is sensed, the controller 180 may control the optical output unit 154 to end the output of light.

The first camera 121a may process video frames such as still or moving images acquired by the image sensor in a video call mode or a capture mode. The processed video frames may be displayed on the touch screen 151 or stored in the memory 170.

The first and second manipulation units 123a and 123b are examples of the user input unit 123, which may be manipulated by a user to input a command for controlling the operation of the mobile terminal 100. The first and second manipulation units 123a and 123b may employ any method if it is a tactile manner allowing the user to perform manipulation with a tactile feeling such as touch, push, scroll or the like. In addition, the first and second manipulation units 123a and 123b may also employ a method of allowing the user to perform manipulation without a tactile feeling through a proximity touch, a hovering touch, or the like.

The drawings are illustrated on the basis that the first manipulation unit 123a is a touch key, but the present disclosure may not be necessarily limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the touch screen 151, or the like.

On the other hand, as another example of the user input unit 123, a rear input unit (not shown) may be disposed on the rear surface of the terminal body. The rear input unit may be manipulated by a user to input a command for controlling an operation of the mobile terminal 100. The content input may be set in various ways. For example, the rear input unit may be used by the user to input a command, such as power on/off, start, end, scroll or the like, controlling a volume level being output from the first or second audio output module 152a or 152b, switching into a touch recognition mode of the touch screen 151, or the like. The rear input unit may be implemented into a form allowing a touch input, a push input or a combination thereof.

The rear input unit may be disposed to overlap with the touch screen 151 of the front surface in a thickness direction of the terminal body. For an example, the rear input unit may be disposed on an upper end portion of the rear surface of the terminal body such that a user can easily manipulate it using a forefinger when the user grabs the terminal body with one hand. However, the present disclosure may not be limited to this, and the position of the rear input unit may be changeable.

When the rear input unit is disposed on the rear surface of the terminal body, a new user interface may be implemented using the rear input unit. Also, the aforementioned touch screen or the rear input unit may substitute for at least part of functions of the first manipulation unit 123a located on the front surface of the terminal body. Accordingly, when the first manipulation unit 123a is not disposed on the front surface of the terminal body, the touch screen 151 may be implemented to have a larger screen.

On the other hand, the mobile terminal 100 may include a fingerprint recognition sensor for recognizing a user's fingerprint, and the controller 180 may use fingerprint information sensed through the finger recognition sensor as an authentication means. The finger scan sensor may be installed in the touch screen 151 or the user input unit 123.

The microphone 122 may be formed to receive the user's voice, other sounds, and the like. The microphone 122 may be provided at a plurality of places, and configured to receive stereo sounds.

The interface unit 160 may serve as a path allowing the mobile terminal 100 to exchange data with external devices. For example, the interface unit 160 may be at least one of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b may be further mounted to the rear surface of the terminal body. The second camera 121b may have an image capturing direction, which is substantially opposite to the direction of the first camera unit 121a.

The second camera 121b may include a plurality of lenses arranged along at least one line. The plurality of lenses may also be arranged in a matrix configuration. The cameras may be referred to as an 'array camera.' When the second camera 121b is implemented as the array camera, images may be captured in various manners using the plurality of lenses and images with better qualities may be obtained.

A flash 124 may be disposed adjacent to the second camera 121b. When an image of a subject is captured with the camera 121b, the flash 124 may illuminate the subject.

The second audio output module 152b may further be disposed on the terminal body. The second audio output module 152b may implement a stereo function in conjunction with the first audio output module 152a, and may be also used to implement a speakerphone mode during a call.

At least one antenna for wireless communication may be disposed on the terminal body. The antenna may be installed in the terminal body or formed on the case. For example, an antenna which configures a part of the broadcast receiving module 111 (see FIG. 1A) may be retractable into the terminal body. Alternatively, an antenna may be formed in a form of film to be attached onto an inner surface of the rear cover 103 or a case including a conductive material may serve as an antenna.

A power supply unit 190 (refer to FIG. 1A) for supplying power to the mobile terminal 100 may be disposed on the terminal body. The power supply unit 190 may include a batter 191 which is mounted in the terminal body or detachably coupled to an outside of the terminal body.

The battery 191 may receive power via a power source cable connected to the interface unit 160. Also, the battery 191 may be (re)chargeable in a wireless manner using a wireless charger. The wireless charging may be implemented by magnetic induction or electromagnetic resonance.

On the other hand, the drawing illustrates that the back cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may link with the touch screen 151 to extend the function of the mobile terminal 100. Another example of the accessory may be a touch pen for assisting or extending a touch input onto a touch screen.

For another example, there is a pouch or cover that covers or accommodates at least one side of the mobile terminal 100. The cover or pouch may be configured to link with the touch screen 151 to extend the function of the mobile terminal 100.

Meanwhile, in the present disclosure, information output from the mobile terminal 100 may be processed in association with the structure or function of the pouch or cover (hereinafter, referred to as a cover). Hereinafter, it will be described in detail with reference to the accompanying drawings.

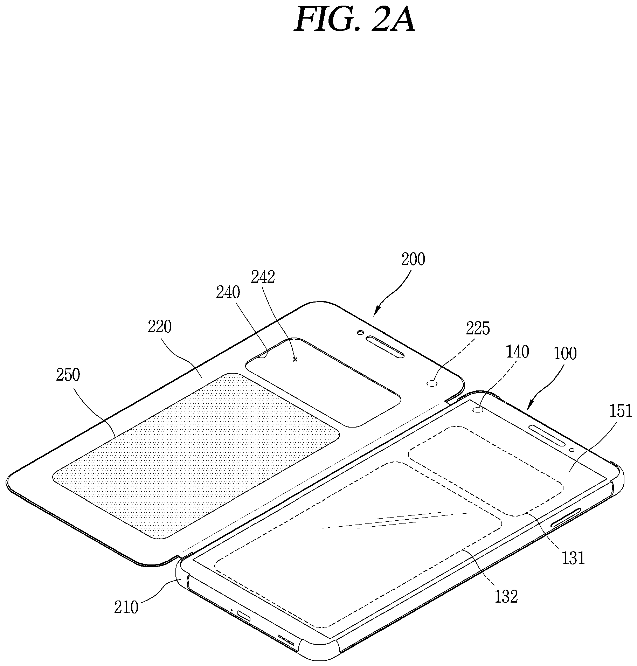

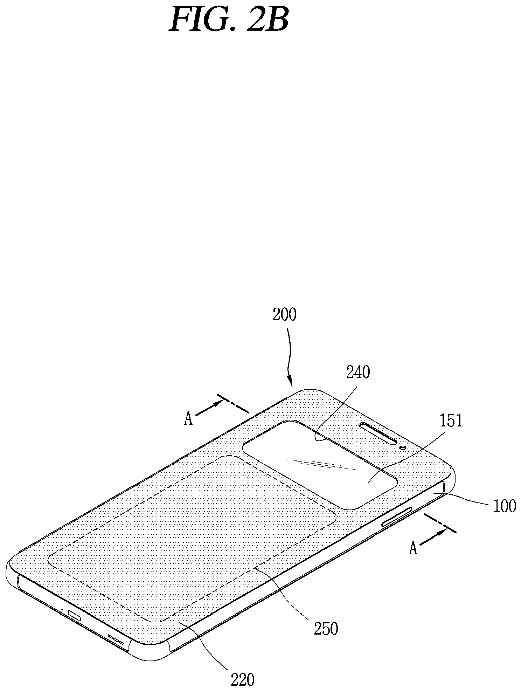

FIGS. 2A and 2B are perspective views showing the mobile terminal 100 accommodated in a cover according to an embodiment of the present disclosure.

According to the drawings, the cover 200 is configured to accommodate a body of the mobile terminal 100. FIG. 2A illustrates a state in which a front surface of the mobile terminal 100 is opened by the cover 200. A state in which the front surface is open will be a state in which the touch screen 151 disposed on the front surface is open.

The cover 200 includes a cover rear portion 210 configured to accommodate a rear surface of the body of the mobile terminal 100. Furthermore, the cover 200 includes a cover front portion 220 rotatably connected to the cover rear portion 210 to open and close the touch screen 151. The cover rear portion 210 and the cover front portion 220 are connected by a connection portion 230 to allow relative rotation between the cover rear portion 210 and the cover front portion 220.

In addition, the cover 200 may be configured with a structure of replacing the rear cover 103 of the terminal body. More specifically, the cover 200 may be coupled to a back portion of the mobile terminal in place of the battery cover in the mobile terminal to which the battery cover is coupled. In this case, a coupling protrusion that allows the cover 200 to be detachable as a battery cover may be formed on an inner surface of the cover rear portion 210, and a coupling groove coupled to the coupling protrusion may be provided in the rear case of the mobile terminal.

For still another example, in a mobile terminal in which a battery cover is integrally provided, the cover 200 may be coupled to the mobile terminal while covering the battery cover. In this case, a coupling protrusion for coupling the mobile terminal and the cover may be disposed at a portion other than the cover rear portion 210.

According to the drawing, the cover rear portion 210 may be protruded from the cover rear portion 210 and formed integrally with the connection portion 230 surrounding a side surface of the mobile terminal. The connection portion 230 is protruded from an edge of a main surface of the cover rear portion 210 facing a rear surface of the mobile terminal to surround a side surface of the mobile terminal. More specifically, the cover side portion may be protruded in a direction perpendicular to the main surface, and formed to surround a part of the side surface or to surround the entire side surface.

According to the drawing, the connection portion 230 may be protruded and extended outward from an edge of the cover rear portion 210 to connect the cover rear portion 210 and the cover front portion 220. The connection portion 230 may have a narrow width so as to be easily bent, and the cover front portion 220 may be rotated while covering the touch screen 151 using the bending of the connection portion 230. In this case, the connection portion 230 may be provided with a supporting jaw that is bent at one side of the cover rear portion 210 and closely attached to one side of a corner of the mobile terminal.

The connection portion 230 may be integrally formed with the cover front portion 220 and coupled to the cover rear portion 210. In this case, the connection portion 230 may be formed of the same material as the cover front portion 220 and extended from one side of the cover front portion.

For another example, the connection portion 230 may be integrally formed with the cover rear portion 210 and coupled to the cover front portion 220. In this case, the connection portion 230 may be formed of the same material as the cover rear portion 210 and extended from one side of the cover rear portion 210.

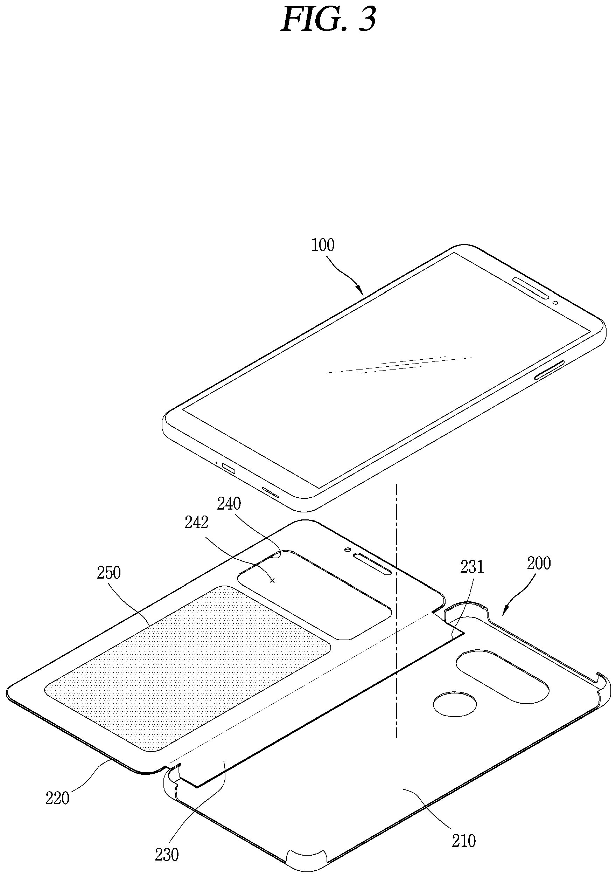

According to an embodiment of the present disclosure, as illustrated in FIG. 3, the connection portion 230 is integrally formed on an inner surface of the cover front portion 220, and extended into a space between the cover front portion 220 and the cover rear portion 210, and accommodated in a region formed by a rib 231 formed on the cover rear portion 210. At this time, the connection portion 230 may be made of polyurethane, leather or cloth, and is not particularly limited as long as it has a soft material.

FIG. 2B illustrates a state in which the cover 200 covers the touch screen 151 of the mobile terminal.

In the covered state, the mobile terminal 100 and the cover 200 have a diary-like shape, thereby improving the portability of the user. In addition, since the cover 200 serves as a protective cover for covering the mobile terminal 100, the mobile terminal 100 can be more safely protected from external impact or stimulation.

The cover rear portion 210 and the cover front portion 220 are arranged in parallel to each other in a covered state, and the connection portion 230 may be formed to block only part of a gap formed between the cover rear portion 210 and the cover front portion 220.

Referring to the present drawing, the cover 200 is formed to expose the visual information of the touch screen 151 while covering the touch screen 151. More specifically, referring to FIG. 2B, the cover front portion 220 may include a window portion 240, and the window portion 240 may be a region made of a light transmissive member. The window portion 240 is formed to display the visual information of the touch screen 151 on an outer surface of the window portion 240 by the light transmittance. Moreover, the window portion 240 may be an opening region where a through hole 221 is formed, and in an embodiment of the present disclosure, the window portion 240 mainly refers to the window hole 221.

The window portion 240 is configured to overlap with the touch screen 151 to display visual information. More specifically, the window portion 240 may be located above a front surface of the touch screen 151 in a state that the cover front portion 220 covers the touch screen 151. According to this structure, the user may recognize an icon, text, an image, and the like, displayed on the touch screen 151 through the window portion 240 from the outside.

Furthermore, the terminal of the present disclosure may activate a portion corresponding to a region exposed by the window portion 240 of the touch screen 151 when an event occurs in the terminal in a state that the cover front portion 220 is closed and the touch screen 151 is deactivated. Then, the terminal may display notification information associated with the generated event in a region on the activated touch screen 151.

FIG. 3 is an exploded view of the cover 200 of FIG. 2A.

Referring to FIG. 3, a window hole 221 is formed on the cover front portion 220, and the window portion 240 (see FIG. 2B) may include a window 241 configured to cover the window hole 221. The window hole 221 may be located at a longitudinal center line of the touch screen 151 of the terminal (or a longitudinal center line of the front surface of the terminal) while the cover 200 covers the terminal.

However, the present disclosure is not limited thereto, and the window portion 240 may have a structure in which only the window hole 221 is formed without the window 241. However, in this example, the window hole 221 may be a through hole that is not covered by the window 241. The cover 200 may expose the visual information of the touch screen 151 to the outside by the window hole 221 while covering the touch screen 151.

The window 241 may include an outer surface formed on the same plane as one surface (outer surface: a surface exposed to the outside in a covered state) of the cover front surface 220, and may be formed of a material such as glass, transparent urethane, transparent synthetic resin, or the like for light transmittance.

In this example, a structure of forming an elliptical pattern along a flange of the window portion 240, more specifically, along an edge of the window 241, is disclosed.

In addition, the terminal is configured to sensing the opening/closing of the touch screen 151 by the cover 200. For example, a magnet 225 may be mounted on the cover 200, and a sensor 140 corresponding to the magnet 225 may be mounted on the terminal. The sensor may be, for example, a hole IC for sensing a magnetic field. However, the present disclosure is not necessarily limited thereto, and for example, it may be possible to recognize that the cover is closed using the proximity sensor 141, or recognize that the cover is closed using the illuminance sensor 142. As described above, the sensing of the opening and closing of the touch screen 151 by the cover 200 may be similarly applicable to the modified examples or other embodiments of the present disclosure.

Hereinafter, embodiments associated with a control method which can be implemented in the mobile terminal having the foregoing configuration will be described with reference to the attached drawings. It should be understood by those skilled in the art that the present disclosure can be embodied in other specific forms without departing from the concept and essential characteristics thereof.

As described above, according to an embodiment of the present disclosure, the cover 200 of the mobile terminal 100 may be formed to expose the visual information of the touch screen 151 to the outside while covering the touch screen 151. Accordingly, the controller 180 may activate one region on the touch screen 151 corresponding to the position and size of the window portion 240 of the cover 200 when the cover 200 covers the touch screen 151 to display the visual information. In addition, the controller 180 may activate another partial region on the touch screen 151 corresponding to the position and size of the translucent portion 250, which is spaced apart from the window portion 240 to cover another partial region of the touch screen 151.

Here, a portion corresponding to the window portion 240 on the touch screen 151 is referred to as a first display portion 131, and a portion corresponding to the translucent portion 250 is referred to as a second display portion 132.

Furthermore, visual information (image information) including an icon, text, an image, and the like may be displayed in the activated one region.

According to an embodiment of the present disclosure, a state in which the cover front portion 220 is superimposed on a front surface of the terminal is defined as a closed state or a first state, and a state in which the cover front portion 220 moves to expose the touch screen 151 is defined as an open state or a second state.

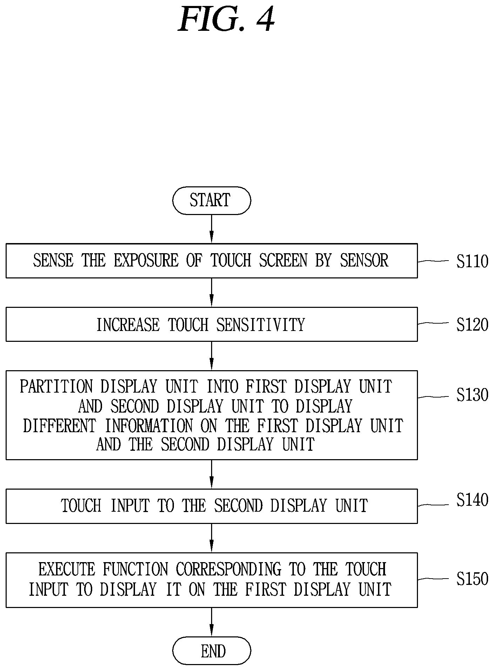

FIG. 4 is a flowchart for explaining a method of controlling a mobile terminal according to an embodiment of the present disclosure. Referring to FIG. 4, the sensor 140 senses the exposure of the touch screen 151 by the cover 200 (S110).

When the first state is switched to the second state, the controller 180 may sense that the touch screen 151 is exposed by rotating the cover front portion 220 based on the sensor 200.

On the other hand, when the sensor 140 senses a magnetic change, the controller 180 determines that the cover front unit 220 has moved, and increases the touch sensitivity of the touch sensor (not shown) provided in the terminal 100 (S120). As a result, it may be possible to perform a touch input even with a smaller touch sensitivity. It is to allow a user input even when the user touches the cover front portion 220, more particularly, the translucent portion 250 as well as when the user directly touches the touch screen 151 to make an input according to an embodiment of the present disclosure.

In the first state, the touch screen 151 is partitioned into a first display unit 131 corresponding to the window portion 240 to display a response according to a user's input applied to to the translucent unit 250, and a second display unit 132 corresponding to the translucent portion 250 to display a response according to a user's input to the window portion 240 so as to display different information on the first display unit 131 and the second display unit 132 (S130). At this time, the information displayed on the first display unit 131 and the second display unit 132 may be completely independent of each other, but may be preferably related information.

Then, when a touch input is carried out through the second display unit 132 (S140), the result may be displayed on the first display unit 131 while a function corresponding to the touch input is executed (S150). It is also true when a touch input is carried out through the first display unit 131, and when a touch input is carried out through the first display unit 131, an execution result of a function corresponding to the touch input may displayed on the second display unit 132. In other words, a function that can be performed by the terminal 100 is carried out by a touch input on the first display unit 131 and the second display unit 132, and the result is displayed on the first display unit 131 or the second display unit 132..

At this time, when an execution result according to the touch input is displayed, more specific information may be displayed.

Here, the first display unit 131 may be a region where graphic objects corresponding to various functions or information are displayed. For example, when the touch screen 151 is partitioned into the first display unit 131 and the second display unit 132, the controller 180 may display graphic objects corresponding to the functions executable in the mobile terminal 100 on the first display unit 131. Here, functions corresponding to graphic objects displayed on the first display unit 131 may be functions that are executable in the mobile terminal 100 in a state in which the cover 200 covers the touch screen 15.

Furthermore, a region size of the first display unit 131 may be the same as or different from that of the second display unit 132, but according to an embodiment of the present disclosure, it is illustrated that a region of the second display unit 132 is larger.

Graphic objects or icons displayed on the first display unit 131 may be selected in advance by the user or related to one or more preset functions from the time when the mobile terminal 100 is released from the factory. Alternatively, graphic objects corresponding to functions whose frequency of use is higher than a predetermined level may be displayed on the first display unit 131 according to the use pattern of the mobile terminal 100 of the user. In addition, when functions displayed on the first display unit 131 are determined according to the frequency of use, graphic objects corresponding to the functions may be displayed in different positions and sizes according to the frequency of use of the functions. For example, a function having a high frequency of use may be displayed in a larger size and may be displayed more ahead.

Hereinafter, a method of controlling a mobile terminal according to an embodiment of the present disclosure will be described with reference to the drawings.

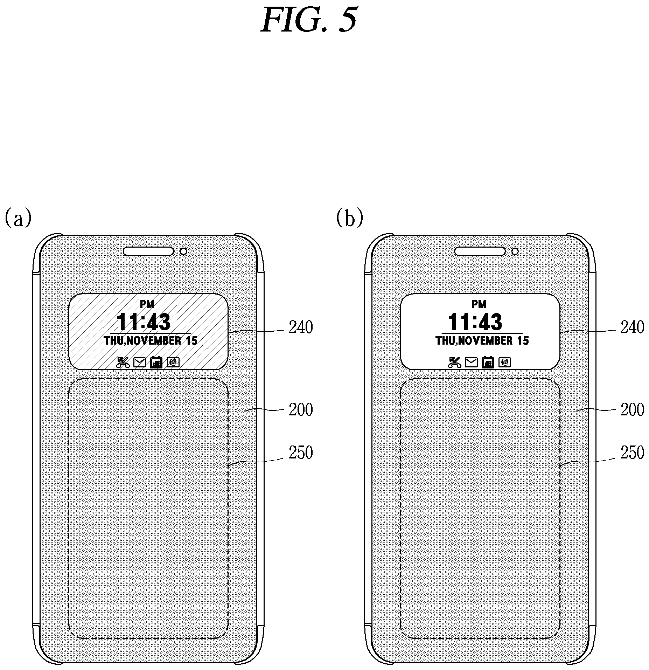

FIG. 5(a) illustrates a mobile terminal in an LCD off state according to an embodiment of the present disclosure, and FIG. 5(b) illustrates a mobile terminal in an LCD on state according to an embodiment of the present disclosure.

The mobile terminal 100 according to an embodiment of the present disclosure may be applicable to a case where the mobile terminal 100 is always on even when the user is not using the mobile terminal 100. In other words, as illustrated in FIG. 5(a), when the user does not use the touch screen 151, the brightness of the touch screen 151 displayed through the window portion 240 is somewhat dark, thereby reducing the consumption of the battery. At this time, when the user touches or knocks the window portion 240 or the first display unit 131, the mobile terminal 100 is in a touch input standby state while increasing the brightness of the touch screen 15 as illustrated in FIG. 5(b).

At this time, as described above, the first display unit 131 may display graphic objects related to one or more preset functions selected in advance by the user or from the time when the mobile terminal 100 is released from the factory. For an example, it may be an icon representing a message, a phone call, an alarm, a calendar, an email, an application, and the like.

The controller 180 of the mobile terminal 100 according to an embodiment of the present disclosure may display preset information in one region of the touch screen 151 corresponding to the window portion 240 of the cover 200, that is, in the first display unit 131. For example, the controller 180 may display current time information or other information related to an event generated from the mobile terminal 100 on the first display unit 131.

According to an embodiment of the present disclosure, "other related information (hereinafter referred to as related information)" may be an execution screen of another service provided through a currently executed function (a function corresponding to the execution screen). For example, when an image previously stored in one region is currently being displayed according to the execution of an album function or a camera function, the "other related information" may be information on the time when an image currently being displayed is captured or information on the place where the image being displayed is captured.

In addition, the related information may be associated with at least one other function. For example, when the content of the received message is briefly displayed on the first display unit 131 on the touch screen 151 corresponding to the window portion 240, the controller 180 may display the sender information of the message on the second display unit 132 as the related information according to a touch and drag input applied from a region displayed with the content of the received message. Of course, the opposite may be the case.

Furthermore, the controller 180 may sense a user's input applied to the first display unit 131 or the second display unit 132. For example, the user's input may be a touch input applied to the first display unit 131 or the second display unit 132, or a touch and drag input applied to the first display unit 131 or the second display unit 132.

Since the touch sensitivity of the mobile terminal 100 is increased according to an embodiment of the present disclosure, the user's touch of the user may be sensed on the cover front surface 220, thereby allowing a drag input. Then, when an open state is sensed since the cover front portion 220 does not cover the touch screen 151, the touch sensitivity of the mobile terminal 100 is decreased again.

When the user's input is sensed, the controller 180 may partition the touch screen 151 into a first display unit 131 corresponding to the window portion 240 and a second display unit 132 corresponding to the translucent portion 250 separated from the window portion 240 and formed of a translucent material, and display different information on the first display unit 131 and the second display unit 132, respectively.

Meanwhile, the first display unit 131 and the second display unit 132 may be regions that display a response according to the user's input, or may be regions that does not display a response according to the user's input. Here, the response according to the user's input may denote a change of image information displayed in the relevant region according to the user's touch and drag input. In other words, when the user's touch input is sensed by the first display unit 131, the controller 180 may display a plurality of graphic objects displayed on the first display unit 131 in a distinguished manner according to the user's touch input.

On the other hand, when at least one graphic object is displayed on the first display unit 131 and specific information is displayed on the second display unit 132, the controller 180 may sense the user's touch input applied to the first display unit 131 or the second display unit 132. Furthermore, in response to the touch input, a graphic object selected by the touch input may be displayed in a distinguished manner. In other words, when one of the graphic objects is selected by the touch input, the controller 180 may display the color, flange thickness or the like of the selected graphic object in a different manner to indicate that it is in a currently selected state. It may be displayed in a distinguished manner not only on the first display unit 131 but also on the second display unit 132.

In addition, when a drag input on the second display unit 132 is applied subsequent to a touch input on the first display unit 131, a screen on which the currently selected graphic object is executed according to the applied drag input may be displayed on the first display unit 131 or the second display unit 132. More specifically, when the user's touch and drag input is extended from a point where any one of the graphic objects displayed on the first display unit 131 to one point of the second display unit 132, the controller 180 may display a screen on which the selected graphic object is executed on the first display unit 131 or the second display unit 132 according to the user's touch and drag input.

In this state, the controller 180 may sense whether or not the touch and drag input is released. Here, the release of the touch and drag input may refer to a state in which the user's finger or the touch object that has applied the drag input is spaced apart from the touch screen. When the touch and drag input is released as described above, the controller 180 displays a screen executed by dragging on the second display unit 132 according to the drag input.

When it is sensed whether the center point of a graphic object moved according to the drag input has moved to the second display unit 132, and as a result of the sensing, the graphic object is not moved to the second display unit 132 according to the drag input, the controller 180 may continue to sense whether or not the touch and drag input is released and whether or not the graphic object has moved to the second display unit 132. Moreover, when the touch and drag input is released in a state where the graphic object moved according to the touch and drag input is not moved to the second display unit 132, the controller 180 proceeds again to step S130 to restore a state where graphic objects are displayed on the first display unit 131, and sense a touch and drag input to any one of the graphic objects.

On the other hand, when the touch and drag input is normally carried out, the controller 180 may execute a specific function corresponding to the moved graphic object. Furthermore, an execution screen corresponding to the execution of the relevant function may be displayed on the first display unit 131 or the second display unit 132.

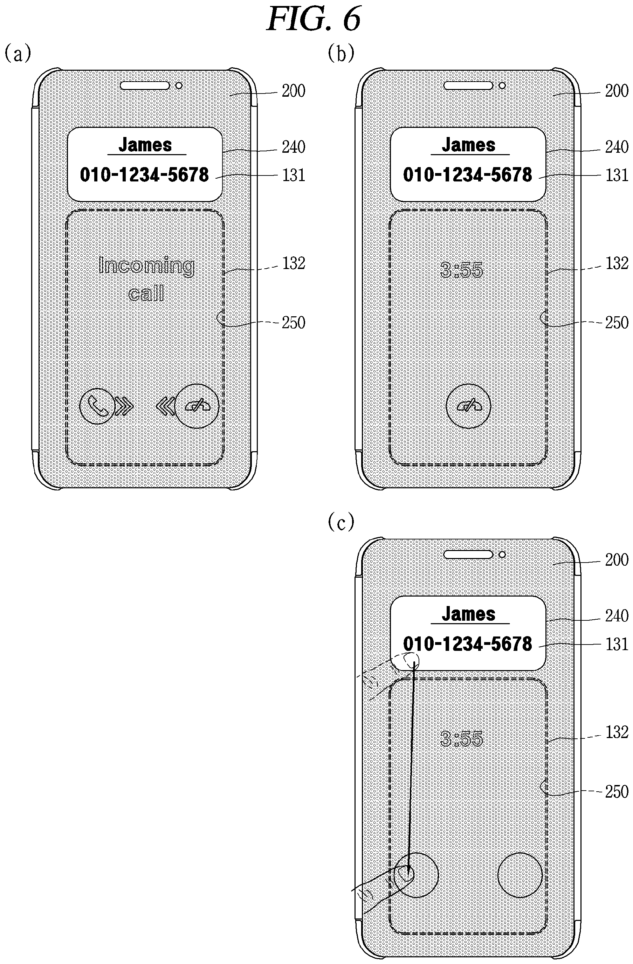

FIG. 6(a) illustrates a state of a mobile terminal when a call signal is received according to an embodiment of the present disclosure, FIG. 6(b) illustrates a state of the mobile terminal in a busy state, and FIG. 6(c) is a view for explaining that an unregistered number is automatically stored in in the address book.

As illustrated in FIG. 6(a), when a call signal is received in a state that the cover 200 is closed, caller information is displayed on the first display unit 131, and whether or not to receive the call signal is displayed on the second display unit 132. At this time, when the call button is touched, a call is made, and when it is desired not to receive a call signal, the end button is touched. If a call is made by touching the call button, as illustrated in FIG. 6(b), the current call time is displayed on the second display unit 132, and when the call is to be ended, the call end button illustrated in FIG. 6(b) is touched. Then, when the number of the called party is not stored, the address book icon is displayed on the second display unit 132 after the call is ended, and that information is to be automatically stored in the address book by a touch and drag input.

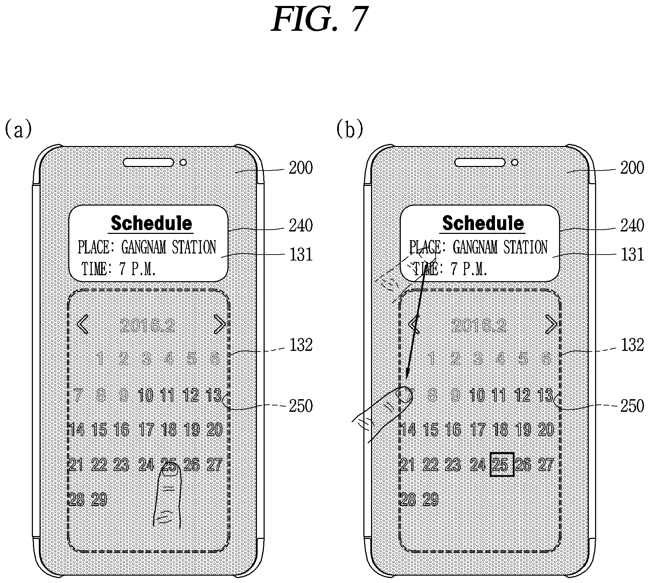

FIG. 7(a) illustrates a mobile terminal displaying schedule information according to an embodiment of the present disclosure, and FIG. 7(b) illustrates a mobile terminal in a state of changing schedule information.

When schedule is to be checked, as illustrated in FIG. 7(a), a monthly calendar is displayed on the second display unit 132, and then when a desired date is touched, detailed information related to the schedule is displayed on the first display unit 131. At this time, for an example, a graphic object performing a function related to the schedule may be displayed on the first display unit 131, and a graphic object related to the schedule may be carried out in a touch and drag manner to display a monthly calendar on the second display unit 132.

Then, when the user desires to change the schedule, he or she may perform a touch and drag input from one point of the first display unit 131 to one point of the second display unit 132 to change the content of the schedule. For an example, as illustrated in FIG. 7(b), when the schedule scheduled for the 21st day is to be changed to the 3rd day, a touch and drag input may be carried out from one point of the first display unit 131 to the 3rd day of the monthly calendar of the second display unit 132 to change the schedule.

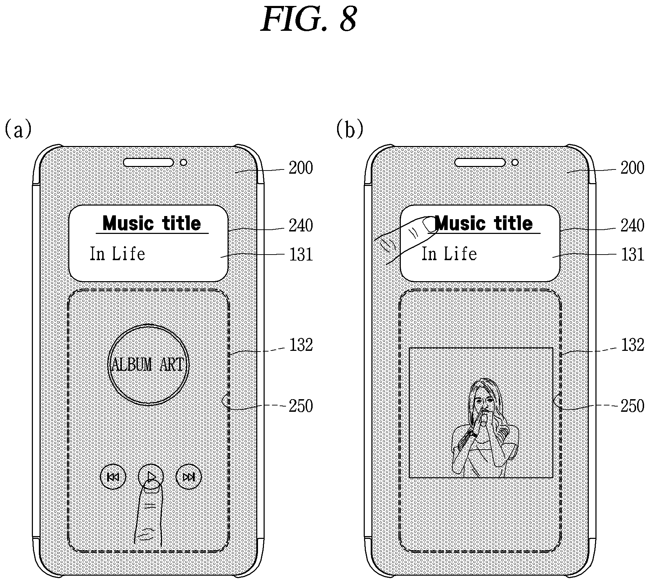

FIG. 8(a) illustrates a mobile terminal in the case of reproducing multimedia according to an embodiment of the present invention, and FIG. 8(b) illustrates a mobile terminal in a state of changing multimedia information.

When multimedia such as music and movie is to be played back, it may be displayed as shown in FIG. 8(a) while the cover 200 covers the entire surface of the mobile terminal 100. In other words, an icon for selecting and playing a file or selecting a previous or next file may be displayed or a graphic object representing information related to a playback speed such as fast forward or rewind may be displayed.

At this time, a graphic object performing a function related to the multimedia is displayed on the first display unit 131, and as illustrated in FIG. 8(a), a graphic object related to the multimedia may be carried out in a touch and drag manner to display visual information related to the execution of multimedia on the second display unit 132.

At this time, when the play button of the second display unit 132 is touched, information related to a file to be played on the first display unit 131 is displayed on the first display unit 131. If the file to be played is a music file, a song title, song lyrics, and the like may be displayed on the first display unit 131. Then, as illustrated in FIG. 8(b), when the first display unit 131 is touched, other information related to information displayed on the first display unit 131, for example, a music video of a song displayed on the display unit 131 may be displayed on the second display unit 132.

As described above, in one embodiment of the present disclosure, a touch input may be alternately performed on the first display unit 131 and the second display unit 132, thereby sequentially performing a specific function. More specifically, when a first touch is entered to the first display unit 131, a result screen according to the first touch is displayed on the second display unit 132, and then when a second touch is entered to the second display unit 132, a result screen according to the second touch may be displayed on the first display unit 131. These interactions may be made continuously.

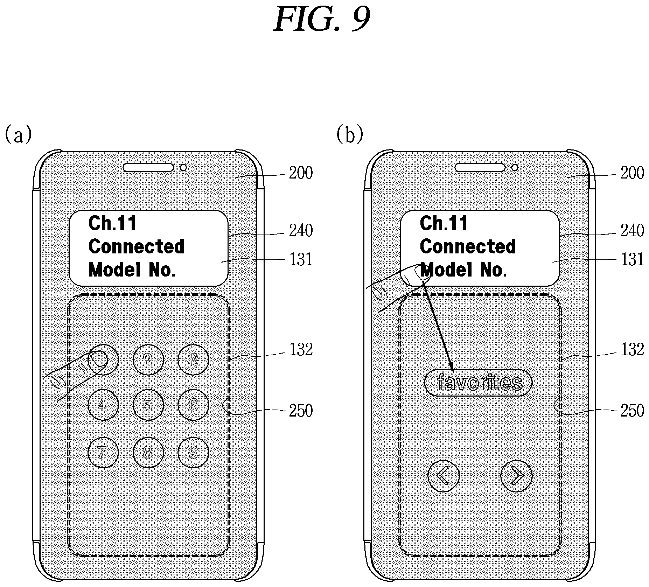

FIGS. 9(a) and 9(b) are views illustrating a case where a mobile terminal is operated as a remote controller according to an embodiment of the present disclosure. For an example, the present disclosure may be applied to a case where the mobile terminal 100 is operated by a remote controller at the time of watching television.

As illustrated in FIG. 9(a), a number touched on the first display unit 131 may be displayed on the first display unit 131 or information related to the touched channel may be displayed on the first display unit 131 by touching the second display unit 132. Then, when the first display unit 131 is touched, the second display unit 132 may display information related to its subsequent functions, and perform an additional function by a touch and drag input. For an example, when a channel displayed on the first display unit 131 is to be added to a favorite, the user may drag from the first display unit 131 to a graphic object indicating the favorite of the second display unit 132, thereby adding it to the favorite.

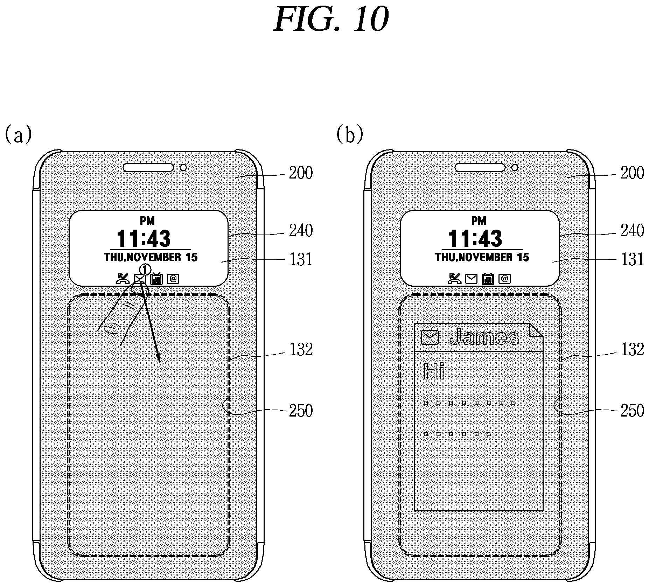

FIG. 10(a) illustrates a state of a mobile terminal when an event is received according to an embodiment of the present disclosure, and FIG. 10(b) illustrates a state of a mobile terminal when a received event is to be checked.

Referring to FIGS. 10(a) and 10(b), when a message is received, a touch and drag input is carried out on a message icon displayed on the first display unit 131 to one point of the second display unit 132, thereby displaying message sender information and message content on the second display unit 132 as illustrated in FIG. 10(b). It may be applied not only when a message is received but also every time an event is received, and for an example, when a missed call is received, the number of missed calls may be displayed as a number on the phone icon, and when an email is received, the number of emails received may be displayed as a number on the email icon.

Examples of the received event may include a message reception, a call signal reception, a missed call, an alarm, a schedule notice, an email reception, information reception through an application, and the like.

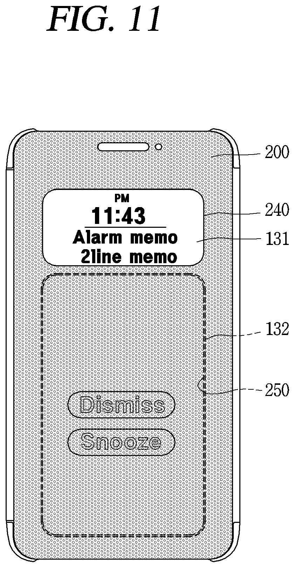

FIG. 11 illustrates a state of a mobile terminal when an alarm sounds according to an embodiment of the present disclosure, and referring to FIG. 11, when an alarm reaches a reserved time, time information is displayed on the first display unit 131, and a graphic object indicating whether or not release the alarm is displayed on the second display unit 132. When a graphic object indicating whether or not to release the alarm displayed on the second display unit 132 is touched, a corresponding function is executed. For an example, when the alarm release button (Dismiss) is touched, the alarm will be turned off, and when the alarm delay button (Snooze) is touched, the alarm will sound again after the specified time.

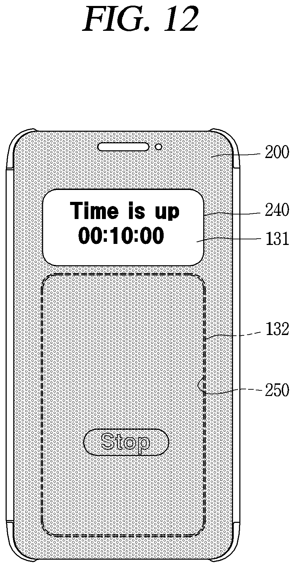

FIG. 12 illustrates a state of a mobile terminal operating as a stop watch according to an embodiment of the present disclosure, and referring to FIG. 12, time information is displayed on the first display unit 131, and a graphic object indicating whether or not to stop is displayed on the second display unit 132. If it is desired to stop the time of the stopwatch, the stop button will be touched.

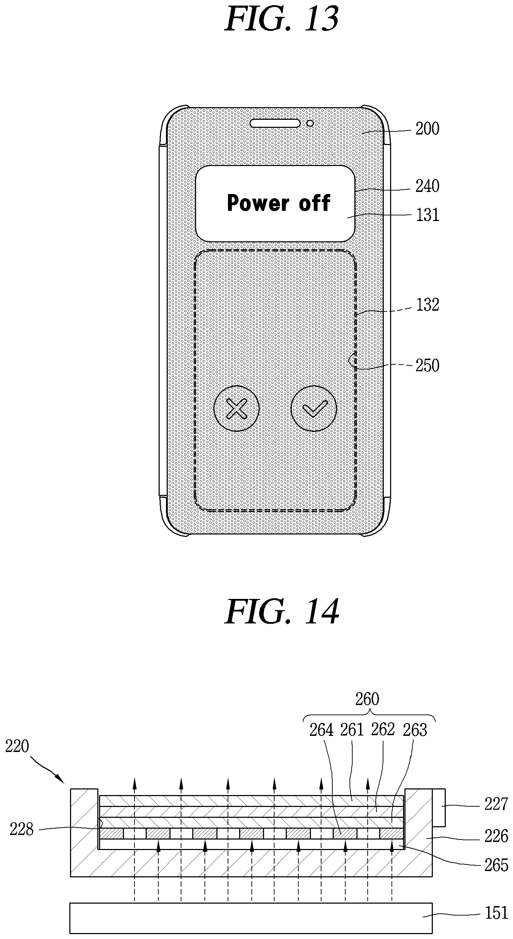

FIG. 13 illustrates a state of a mobile terminal when power is turned off according to an embodiment of the present disclosure, and referring to FIG. 13, a message with the content of turning off power (Power Off) is displayed on the first display unit 131, and an execution button is displayed on the second display unit 132. If it is desired to turn off the power, the power off button (check mark) will be touched, and if it is desired to cancel, the cancel button (X) will be touched.

FIG. 14 is a cross-sectional view taken along line A-A in FIG. 2B, which will be described below with reference to FIG. 14.

In an embodiment of the present disclosure, an end portion is formed to be stepped so as to easily flip the cover front portion 220 in a first state. In other words, when the cover front portion 220 covers a front surface of the mobile terminal 100 and it is desired to convert the cover front portion 220 into an open state, a protruding portion 227 is formed along an appearance of the cover front portion 220 to easily engage with the user's hand.

Referring to FIG. 14, the cover front portion 220 includes a non-metallic member 226 made of a plastic material having a substantially " 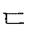 "-shape, and the non-metallic member 226 may be transparent or translucent as an injection molded article. The non-metallic member 226 has a recess portion 228 which is recessed toward the inside, and a film layer 260 is provided in the recess portion 228. As a result, the film layer 260 does not protrude from the non-metallic member 226.

In the embodiment of the present disclosure, the cover front portion 220 is semi-transparent by passing part of light emitted from the touch screen and blocking part thereof. To this end, the film layer 260 includes a silk printed layer 264. The silk printed layer 264 has a uniform pattern such as a honeycomb pattern, and the pattern may be formed with a plurality of circular or polygonal shapes adjacent to each other.

For the film layer 260, a PET (polyester) film layer 261 is provided on the upper most layer thereof, and an UV (ultraviolet) pattern layer 262 is formed on a lower surface of the PET film layer 261, and a deposition layer 263 is formed under the UV pattern layer 262, and a silk printed layer 264 is formed under the deposition layer 263. The PET film layer 261 serves to support the UV pattern layer 262, the deposition layer 263 and the silk printed layer 264, and the UV pattern layer 262 is formed along one direction in a shape similar to hair lines. Furthermore, the deposition layer 263 is formed for gloss, and made in a vacuum tube. A part of the cover front portion 220 becomes opaque by the silk printed layer 264.

As described above, according to an embodiment of the present disclosure, the film layer 260 has a double patter with the UV pattern layer 262 and the silk printed layer 264.

The film layer 260 is adhered to the recess portion 228 with an optically clear adhesive (OCA) film 265, and the OCA film 265 is light transmissive and a double-sided tape capable of being adhered to both sides. The film layer 260 is adhered to the recess portion 228 by the OCA film 265. As a result, the film layer 260 does not protrude from the non-metallic member 226.

The foregoing present disclosure may be implemented as codes readable by a computer on a medium written by the program. The computer-readable media includes all types of recording devices in which data readable by a computer system can be stored. Examples of the computer-readable media may include ROM, RAM, CD-ROM, magnetic tape, floppy disk, and optical data storage device, and the like, and also include a device implemented in the form of a carrier wave (for example, transmission via the Internet). In addition, the computer may include the controller 180 of the electronic device. The foregoing embodiments are merely exemplary and are not to be considered as limiting the present disclosure. The scope of the invention should be determined by reasonable interpretation of the appended claims and all changes that come within the equivalent scope of the invention are included in the scope of the invention.

The embodiments of the present disclosure may be applicable to a mobile terminal having a cover for covering a display.

## Claims

1. A mobile terminal, comprising:
a main body having a front surface and a rear surface;
a touch screen disposed on the front surface;
a cover mounted on the main body to open and close the touch screen, and provided with a window portion for exposing a partial region of the touch screen to the outside and a translucent portion spaced apart from the window portion to cover another partial region of the touch screen; and
a controller configured to control information displayed on a first display unit corresponding to the window portion and a second display unit corresponding to the translucent portion on the touch screen,
wherein the controller controls information displayed on the second display unit by an input to the first display unit or controls information displayed on the first display unit by an input to the second display unit while the cover covers the front surface.

2. The mobile terminal of claim 1, wherein an input to the second display unit is based on an input applied through the translucent portion, and a function executable in the main body is executed by an input to the second display unit.

3. The mobile terminal of claim 2, wherein the window portion is a window hole to be open or a window provided in the window hole, and
an input to the first display unit is based on an input applied through the first display unit or window, and any one function that is executable in the main body is executed by an input to the first display unit.

4. The mobile terminal of claim 3, wherein the cover is provided with at least one magnet, and the main body is provided with a hole sensor for sensing a magnetic force change due to the magnet.

5. The mobile terminal of claim 4, wherein when it is sensed by the hole sensor that the cover is closed, the controller increases the touch sensitivity of a touch sensor provided in the main body to allow an input through the translucent portion.

6. The mobile terminal of claim 5, wherein an input applied through the window portion or the translucent portion is a touch input or a touch and drag input while the cover is closed.

7. The mobile terminal of claim 1, wherein information displayed on the second display unit by an input to the first display unit is information related to information displayed on the first display unit, and information displayed on the first display unit by an input to the second display unit is information related to information displayed on the second display unit.

8. The mobile terminal of claim 1, wherein the cover comprises:
a cover front portion configured to cover the front surface;
a cover rear portion configured to cover the rear surface and fastened to the main body; and
a connection portion configured to connect the cover front portion and the cover rear portion.

9. The mobile terminal of claim 8, wherein the cover front portion comprises:
a non-metallic member provided with a recess portion in which the inside is recessed, and formed of a translucent plastic material; and
a film layer accommodated in the recess portion,
wherein the film layer is formed not to protrude from the non-metallic member.

10. The mobile terminal of claim 9, wherein the film layer comprises:
a PET (polyester) film layer;
a UV pattern layer provided on one side of the PET film layer;
a deposition layer provided on one surface of the UV pattern layer; and
a silk printed layer provided on one side of the deposition layer, and
wherein the silk printed layer has a predetermined pattern.

11. The mobile terminal of claim 9, wherein one end portion of the non-metallic member is formed with a protruding portion to be stepped downward.

12. The mobile terminal of claim 8, wherein a rib is formed on one surface of the cover rear portion to provide a space for accommodating the connection portion.

13. The mobile terminal of claim 12, wherein the connection portion is any one of polyurethane, leather, and cloth.

14. A method of controlling a mobile terminal having a cover disposed to cover at least part of a touch screen and formed with a window portion, the method comprising:
sensing that the cover covers the touch screen;
increasing the touch sensitivity of the mobile terminal when the touch screen is covered;
partitioning the touch screen into a first display portion corresponding to the window portion and a second display portion corresponding to a translucent portion spaced apart from the window portion, and displaying different information on the first display portion and the second display portion; and
controlling information displayed on the second display unit by a touch input of the first display unit or controlling information displayed on the first display unit by a touch input of the second display unit.
